# EUROPEAN PATENT APPLICATION

(11) **EP 3 650 706 A1**
(43) Date of publication of application: **13.05.2020**
(21) Application number: 19201705.1
(22) Date of filing: 07.10.2019
(51) Int. Cl.: F04D 29/32, F01D 5/08, F04D 29/58, F04D 29/64

(54) **COMPRESSOR STAGE WITH BLEED AIR TUBES**

(30) Priority: 09.11.2018 GB 201818269
(71) Applicant: Rolls-Royce plc, London N1 9FX (GB)
(72) Inventor: Evans, Peter, Derby, Derbyshire DE24 8BJ (GB)
(74) Representative: Rolls-Royce plc

(57) **Abstract**

A compressor stage comprising a pair of bladed discs spaced apart from one another having a plurality of bleed tubes located in the space between the bladed discs. Each bleed tube has an internal and an external surface extending radially from an inter-disc cavity at the radially innermost section of the tube to a rim of the bladed discs at radially outermost section of the tube. The bleed tubes are positioned between the bladed discs, such that the bleed tubes remove a portion of air passing through the compressor stage and direct it to an area within the inter-disc spacing. The geometric shape of the internal bore of each of the bleed tubes changes along its lengths. The cross-section of each of the bleed tubes may have a cross sectional area that changes from a substantially non-polygonal shape at the radially outermost end to a substantially polygonal shape at the radially innermost end.

## Description

### Field of the Disclosure

The invention relates to a vortex reduction pipe also known as an air bleed tube for use in a compressor.

### Background of the Disclosure

In a gas turbine engine bleed airflow is taken from the compressor stages to carry out cooling and or sealing of other components. Typically this bleed air is taken from the inner annulus of the gas path between sets of compressor blades and into the inter-disc spacing. However, a vortex can form between the discs of the compressor stages if the bleed air is just passed through holes in the drum. The presence of a vortex in this region can produce high pressure losses, which need to be mitigated. In order to achieve this it is known in the art to use bleed tubes as vortex reducers.

These bleed tubes are typically pipes that are directed radially inward from the gas path to the bore of the discs and are used to guide air through. By passing the airflow through the tube, rather than just through an aperture, the circumferential speed of the air is not increased. As a result of this a free vortex is not able to form. It can therefore be seen that the use of a bleed tube is beneficial to the performance of the engine. There are, however, issues with these tubes as the airflow is limited where the tubes come together at their inner diameter. Furthermore, the tubular shape of these components is not the most aerodynamically efficient. Consequently, there is a need to improve the design constraints within the vortex reduction or bleed tube.

### Summary of the Disclosure

According to a first aspect there is provided a compressor stage comprising a pair of bladed discs spaced apart from one another and a plurality of bleed tubes located in the space between the bladed discs, wherein each of the bleed tubes has an internal and an external surface extending radially from an inter-disc cavity at the radially innermost section of the tubes to a rim of the bladed discs at radially outermost section of the tubes and positioned between the bladed discs, such that the bleed tubes removes a portion of air passing through the compressor stage and direct it to an area within the inter-disc spacing; and wherein the geometric shape of the internal bore of each of the bleed tubes changes along its length.

By changing the internal bore of the bleed tube along its length allows for an improvement of the airflow along the path. It can also improve the interaction between components which can improve the airflow into the inter-disc spacing.

The compressor stage, wherein the cross-section of each of the bleed tubes may have a cross sectional area that changes from a substantially non-polygonal shape at the radially outermost end to a substantially polygonal shape at the radially innermost end.

The compressor stage wherein the cross-sectional area of each of the bleed tubes may change along its length from the radially innermost point to the radially outermost point.

The compressor stage wherein the external surface of each of the bleed tubes may feature a flange to locate it.

The compressor stage wherein the radially innermost section of each of the bleeds tube may have an external profile for preventing rotation of the tube.

The compressor stage wherein the radially outermost section of each of the bleed tubes may have an aerodynamically efficient external profile.

The compressor stage as claimed in any preceding claim wherein the bleed tubes are manufactured by additive layer manufacturing.

The compressor stage wherein the internal cross sectional profile of each of the bleed tubes can be an oval at the radial outermost section, circular towards the centre, before being rectangular or square at the radially innermost section.

The compressor stage wherein each of the bleed tubes may be a single piece construction.

The compressor stage wherein the compressor stage may be used in a gas turbine engine.

A gas turbine engine may include one or more compressor stages presented above.

A compressor may include one or more compressor stages presented above.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### Brief Description of the Drawings

Embodiments will now be described by way of example only, with reference to the Figures, in which:
**Figure 1** is a sectional side view of a gas turbine engine;
**Figure 2** shows the mounting of a bleed tube within the compressor stage of the present disclosure;
**Figure 3** is a cross sectional view of the bleed tube as shown in Figure 2.

### Detailed Description

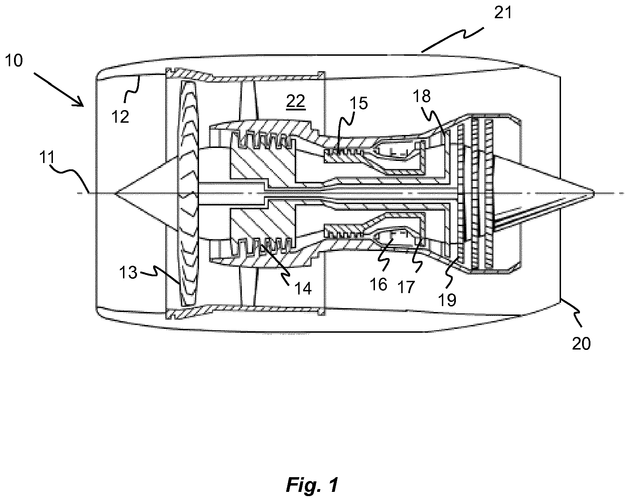

With reference to **Figure 1**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the airflow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft. The invention is not limited to such an embodiment of a gas turbine engine, but is suitable for incorporation with all suitable types of gas turbine engine.

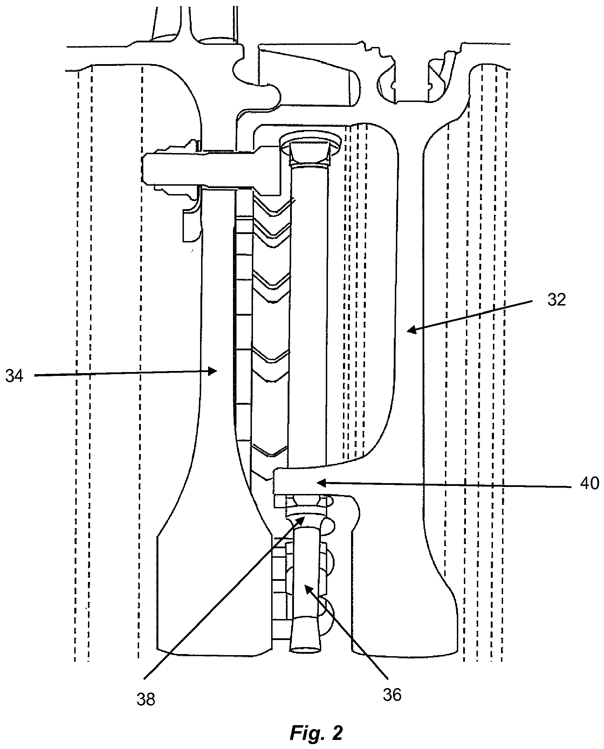

**Figure 2** shows the mounting of the bleed tubes within the compressor stage. This can be incorporated in either or all of the low pressure compressor stage, the intermediate compressor stage and/or of the high pressure compressor stage. As shown the tubes 36 are mounted between a pair of bladed discs 32 and 34 of the compressor. Here they are shown mounted to one of the disc holding the rotor blades. The bleed tubes are secured in place with the flanges 38 on the bleed tubes interconnecting with couplers mounted on the disc 40. The bleed tubes are all shown extending to the same length as the compressor disc arrangement, however, they can extend to any suitable length, such that they do not allow the free vortex to form. The bleed tube may be recessed into the rim of the disc; alternatively, they may be flush with the surface of the disc. Suitable sealing may be used to ensure that there is no air leakage around the connection point. This can be due to the closeness of fit although a suitable sealant may also be used around it.

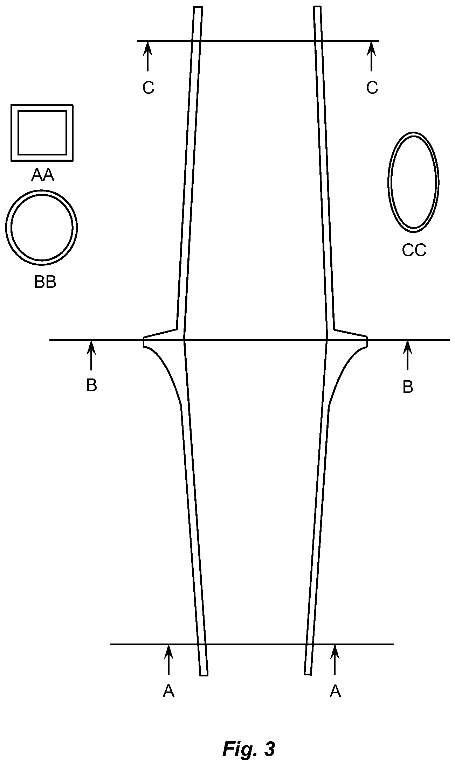

In order to overcome the problems with bleed tubes it is desirable to be able to change their cross-sectional profiles along their length. **Figure 3** shows an example of such a tube design. In this the bleed tube is provided with an aerodynamic inlet this is shown as an ellipse, but could also be an oval, circle or any other suitable shape. The cross-section at the radially outermost end is shown as C-C. Radially inward from the inlet the profile changes from the aerodynamic opening into a tube having a circular or oval cross-section along the middle section of its length; this is represented by cross-section B-B. This change from a more aerodynamic profile into a substantially circular cross section allows for a component design at this point that is easier to support and carry. At the cross section B-B there is also shown to be an outward flange provided to allow the tube to be located and secured in position. These however, do not affect the internal cross section of the tube. At the radially innermost section of the tube from the opening the cross-section can be made to be substantially rectangular or square, in order to allow for a greater packing density of the ends of the pipes; this is shown as cross section A-A. The rectangular or square ends may also be beneficial in preventing rotation of the pipes, as they can be fixed in position by contact with neighbouring tubes or other components.

Although the tube has been described relative to **Figure 2** and having three separate sections each having a different cross-sectional profile, the invention is not limited to such embodiments. In some cases there may be two sections, for example an aerodynamic shaped opening such as an ellipse passing into a circular or a square tube, or similarly for example from a circular opening to a square radially innermost section. Alternatively to the radially linear shape shown in **Figure 2**, the tubes may feature a curved axial profile, so as to fit around components or such that two bleed tubes are brought together at their radially inner end. Alternatively, the tube may branch along their length, so that from a single entry there is provided two exits at the radially innermost end. Or, that for a single exit there are provided two inlets at the radially outermost end. In these instances the inlet and exits can be any suitable shapes with the cross-sectional profile changing along the length. When mounted in the inter-disc spacing the tubes may all be identical. Alternatively, there could be a number of different tube configurations depending upon the airflow requirements. For example three section bleed tubes may be paired with two section bleed tubes.

The external profile of the tube can have any suitable cross-sectional shape, and may be independent of the internal cross-sectional shape of the tube. The base external profile may be substantially square or rectangular similar to the internal profile at that point for anti-rotation purposes. This could extend all the way to the surface or may change to be oval or circular. The changing of the profile to circular will make the tube easier to mount on other components. The external profile may also feature engagement features so that the bleed tubes can be mounted. These may include a shoulder near an upper surface that can connect with the lower rim of the disc in order to prevent the tube form being forced to far through the aperture in the rim of the disc. These shoulders may taper back into a narrower lower profile or remain constant, with only the part that engages with the rim having a narrower profile. The external profile may also feature a flange which extends outwardly from the external profile of the tube for connecting to a clip. The surface of the flange may be hexagonal, such that it has flat engagement surfaces, or it may be square, possibly having rounded corners, it also may be circular, or any other suitable shape for engaging with the clip. Alternatively, the external profile of the tube may be configured with a notch so as to allow it to engage with a clip mounted to the disc. The radially innermost point may also be tapered inwardly or outwardly to engage with other components on the disc. They may also feature engagement features, such that they are able to engage with both of the discs on either side of the inter-disc spacing.

In order to achieve this shape the tubes may be manufactured by Additive Layer Manufacturing (ALM) or 3D printing. This has been found to be able to produce complex 3D shapes in a highly accurate and efficient way. ALM can be performed in a number of known ways depending upon the material system being used. The materials employed in utilising these manufacturing techniques can vary from plastics including thermosets and elastomers, to ferrous and nonferrous alloys, graphite and waxes. Typically the manufacturing process includes a powder bed process, which fuses thin layers of the material using either lasers or electron beams to recreate the geometry of the component as defined in a Computer Aided Design (CAD) file. Alternatively the material may be extruded/deposited by heating the material through an extrusion nozzle following a predefined path. Then by depositing layers onto previous layers a 3D object can be formed. 3D printing can be employed wherein layers of heated material are deposited on top of each other to form the component. Alternatively, a liquid vat process can be utilised which uses a UV curable thermoset polymer liquid and using stereolithography to create the desired geometry. Consequently, form using these processing methods complex shapes can be manufactured quickly, reliably and with less waste. The bleed tube in this disclosure may be made of any one of these suitable methods and can be manufactured from titanium, steel or nickel alloys. The use of additive layer manufacturing can result in the component being of a single piece construction, which is beneficial in terms of strength, as there are no weak joints that can decrease the lifetime of the component.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A compressor stage comprising a pair of bladed discs spaced apart from one another and a plurality of bleed tubes located in the space between the bladed discs, wherein each of the bleed tubes has an internal and an external surface extending radially from an inter-disc cavity at the radially innermost section of the tubes to a rim of the bladed discs at radially outermost section of the tubes and positioned between the bladed discs, such that the bleed tubes removes a portion of air passing through the compressor stage and direct it to an area within the inter-disc spacing; and wherein the geometric shape of the internal bore of each of the bleed tubes changes along its length.

2. The compressor stage as in claim 1 wherein the cross-section of each of the bleed tubes has a cross sectional area that changes from a substantially non-polygonal shape at the radially outermost end to a substantially polygonal shape at the radially innermost end.

3. The compressor stage as in claim 1 wherein the cross-sectional area of each of the bleed tubes changes along its length from the radially innermost point to the radially outermost point.

4. The compressor stage as claimed in any one of claims 1 to 3 wherein the external surface of each of the bleed tubes feature a flange to locate it.

5. The compressor stage as claimed in any one of claims 1 to 4 wherein the radially innermost section of the bleed tube has an external profile for preventing rotation of the tube.

6. The compressor stage as claimed in any one of claims 1 to 5 wherein the radially outermost section of each of the bleed tubes has an aerodynamically efficient external profile.

7. The compressor stage as claimed in any preceding claim wherein the bleed tubes are manufactured by additive layer manufacturing.

8. The compressor stage as claimed in any one of claims 1 to 3 wherein the internal cross sectional profile of each of the bleed tubes is an oval at the radial outermost section, circular towards the centre, before being rectangular or square at the radially innermost section.

9. The compressor stage as claimed in any preceding claim, wherein each of the bleed tubes is a single piece construction.

10. The compressor stage as claimed in any preceding claim, wherein the compressor stage is for use in a gas turbine engine.

11. A gas turbine engine that includes one or more compressor stages of any one of claims 1 to 10.

12. A compressor that includes one or more compressor stages of any one of claims 1 to 10.
